(19) Europäisches Patentamt

European Patent Office

Office européen des brevets

(11) **EP 0 582 010 B1**

(12) **EUROPEAN PATENT SPECIFICATION**

(45) Date of publication and mention
of the grant of the patent:
**21.08.1996 Bulletin 1996/34**

(51) Int Cl.<sup>6</sup>: **F24F 9/00**, F24F 3/16,
B01D 46/42

(21) Application number: **92309419.7**

(22) Date of filing: **15.10.1992**

(54) **Air cleaning screen**

Schirm für Luftreinigung

Ecran d'épuration d'air

(84) Designated Contracting States:
**DE FR GB IT**

(30) Priority: **07.08.1992 JP 211760/92**

(43) Date of publication of application:
**09.02.1994 Bulletin 1994/06**

(73) Proprietor: **TORNEX INCORPORATED**
**Tokyo 160 (JP)**

(72) Inventor: **Matsui, Shigeo**
**Suginami-ku, Tokyo (JP)**

(74) Representative: **Leckey, David Herbert et al**
**Frank B. Dehn & Co.,**
**European Patent Attorneys,**
**179 Queen Victoria Street**
**London EC4V 4EL (GB)**

(56) References cited:
• **PATENT ABSTRACTS OF JAPAN vol. 15, no. 332**
**(C-0861) 23 August 1991 & JP-A-03 128 004**
**(MATSUSHITA ELECTRIC WORKS) 31 May 1991**

## Description

The present invention relates generally to a screen used for partitioning a room, and more particularly to a screen of this kind equipped with an air cleaner or a fan so as to have an air cleaning function.

Conventionally, screens are widely utilized because of the following advantages provided thereby. First, a screen can be installed for partitioning a room more easily than a wall because architectural tools are not necessary. It can be easily moved and removed in accordance with a change of usage of the room. An appropriate height of the screen which does not extend up to the ceiling provides a good visibility and does not give a coercive feeling so that people are free from isolation. Since the conventional screen is provided only for the purpose of partitioning a room, it does not produce any other effect than defining a space from the floor to a certain height. On the other hand, when the conventional screens are used to partition a room into a plurality of booths, contaminated air (e.g., cigarette smoke, exhausted gas, toxic gas or the like) or a bad smell may flow into a booth from the outside or another booth through the space above the screens since air is allowed to freely flow among the booths through this space. Such contaminated air or bad smell may flow from one booth to another.

To solve the above problem, the present applicant has proposed:

(1) A screen with air curtain (Japanese Laid-open Utility Model Application No. 1-114874); and
(2) A screen with an air cleaner and an air curtain (Japanese Laid-open Patent Application No. 2-45014).

The air curtain (1) by the present applicant comprises a screen element having an air blowing outlet on an upper portion and an air extraction inlet on a lower portion; and a fan arranged inside this screen body. In this prior art example, one or more screen elements are installed to surround part of a room with their air intakes directed inwardly, air is sucked by means of the air intakes of the screen elements through the fan and discharged from the air blowing outlets to form an air curtain above the screen elements, whereby a space or the part of the room is defined by this air curtain and the screen elements, with the result that air possibly contaminated in this space is prevented from flowing to the outside.

The air curtain (2), also by the present applicant, comprises an air blowing outlet on a screen element for forming an upwardly directed air curtain; an air intake port and an air discharging port on one surface and the opposite surface of the screen element, respectively; an air cleaner and a fan between the air discharging port and the air intake port; and an airflow amount adjuster arranged on the downstream side of the fan in the screen element for adjusting an amount of air discharged from the air discharging port. One or more screen elements are installed to surround part of a room, with the air intake ports directed inwardly, to thereby define a space or the part of the room by this air curtain and the screen elements. Further, when air sucked through the air intake port is discharged from the air discharging port, the discharged air amount is adjusted by the airflow amount adjuster so as to be larger than an amount of air which is involved in the space from the outside, whereby a negative pressure state is established in the space to prevent contaminated air in this space from flowing to the outside to maintain the cleanness of the whole room except for this space.

However, in the example (1), since the airflow amount is increased as the air curtain blowing up from above the screen elements involves air inside and outside the space defined by the screens and the air curtain, a cause of contamination such as cigarette smoke, if produced in this space, will be mixed in the air curtain. To prevent such contaminated air from flowing to the outside of the space, additional facilities such as an air extraction pipe and an air discharger are required for discharging, from the ceiling or the floor located in the space, an amount of air larger than an amount of air involved from the outside of the space by the air curtain. Further, by installing these facilities, it becomes always necessary to maintain a negative pressure state inside the space.

The example (2), in turn, is advantageous in removing the necessity of additionally installing an air extraction pipe and an air discharger on the ceiling, holding a space in a room surrounded by the screen elements and the air curtain in a negative pressure state, and maintaining the cleanness of the space. However, since the example (2) produces a pressure loss caused by an airflow amount adjuster such as a damper which adjusts the amount of air discharged from the air discharging port, a larger fan and a high-power motor are required in order to maintain a predetermined amount of discharged air and an air amount required to form an air curtain.

Patent Abstracts of Japan vol. 15, No. 332 (C-0861) 23 August 1991 discloses a screen element for an air cleaning screen comprising:

two spaced apart, opposed screen surfaces;
an air blowing port formed in an upper portion of the screen element;
a circulating air intake port formed in one surface thereof;
a fan disposed between said air blowing port and said circulating air intake port for taking in air through said circulating air intake port and blowing air out through said air blowing port to form an upwardly directed air curtain and;
a second air intake port formed on the same surface on which said circulating air intake port is provided.

The present invention is characterised over this prior art in that an air discharge port is formed on the surface opposite to both the second air intake port and the circulating air intake port and in that;

air cleaning means and air discharging means are both disposed between said second air intake port and said air discharging port.

From a second aspect the invention provides a screen with an air cleaning function comprising at least one first screen element as described above.

By means of this arrangement there is a screen having an air cleaning function which is capable of constantly developing a negative pressure in a space defined in a room to prevent contaminated air possibly produced in the space from flowing out, and cleaning such contaminated air without installing an air extraction pipe or an air discharger on the ceiling of the room or the like.

The screen may be defined solely by one or more first screen elements, or may comprise a combination of first screen elements and second air curtain defining elements comprising only an air blowing port and a circulating air intake port for forming an upwardly directed air curtain in an upper portion and one screen surface thereof, respectively, and a fan disposed between the air blowing port and the circulating air intake port.

Some embodiments of the invention will now be described by way of example and with reference to the accompanying drawings, in which:

Fig. 1 is a vertical sectional view showing a screen element having an air cleaning function according to one embodiment of the present invention;
Fig. 2 is a plan view showing how the screen elements are installed in a room;
Fig. 3 is a lateral view showing the flow of air when the screen elements are installed in a room;
Fig. 4 is a vertical sectional view showing a screen element according to another embodiment of the present invention;
Fig. 5 is a vertical sectional view showing a screen element for forming an air curtain;
Fig. 6 is a plan view showing a further embodiment, which is similar to Fig. 2;
Fig. 7 is a plan view showing a further embodiment, which is similar to Fig. 2;
Fig. 8 is a plan view showing a further embodiment, which is similar to Fig. 2; and
Fig. 9 is a lateral view showing a further embodiment, which is similar to Fig. 3.

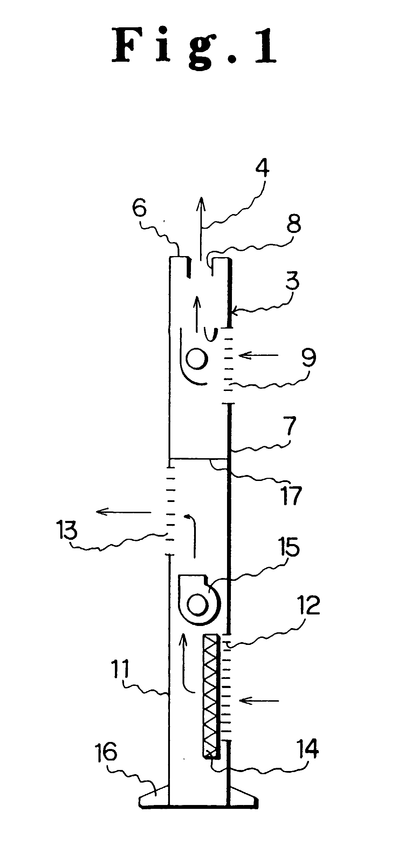

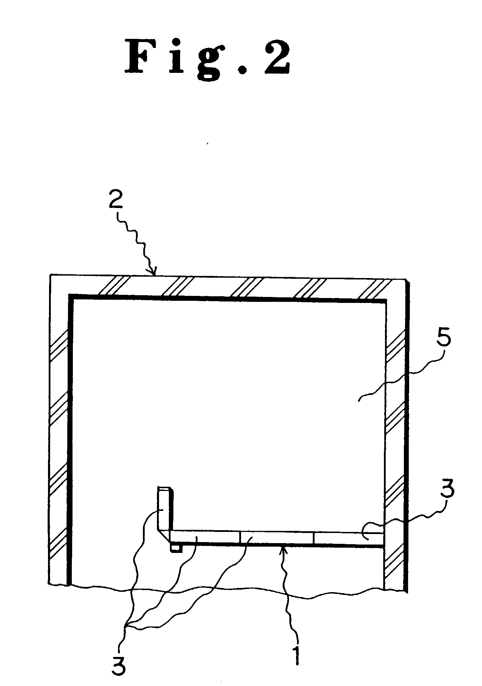

A screen 1 having an air cleaning function, generally designated by reference numeral 1, has one or more screen elements 3 which are installed to surround part of a room 2, as shown in Fig. 2, with a circulating air intake port 9 and an air intake port 12 of each screen element being directed inwardly, as will be later described in detail. As will be explained below, the amount of air discharged by air dischargers 15 (Fig. 1) disposed in the screen elements 3 is larger than the amount of air which is involved by an air curtain formed by fans 10 from the outside of a space 5 surrounded by the air curtain 4. Referring to Fig. 1, the screen element 3 is provided with an air blowing outlet 8 on an upper portion 6 thereof for creating the upwardly directed air curtain 4, together with the circulating air intake port 9 formed on one surface 7 of the screen element; the fan 10 disposed between the air blowing outlet 8 and the circulating air intake port 9; an air intake port 12 and an air discharging port 13 on the one surface 17 and the opposite surface 11, respectively; and an air cleaner 14 and the air discharger 15 disposed between the air intake port 12 and the air discharging port 13.

The screen element 3 has a panel-like appearance, legs 16 in a lower part thereof, and a shape appropriate to surround part of a room, as illustrated in Fig. 1. There are prepared several kinds of screens elements having different widths and heights so as to match a variety of applications.

One or more screen elements 3 are installed in the room 2 as stated above to surround part of the room 2. The screen element 3 is provided in an upper portion thereof with the air blowing outlet 8 for generating an air curtain. This air blowing outlet 8 may have an arbitrary shape as long as it can form an upwardly directed air curtain 4. For example, the air blowing outlet 8 may have a long rectangular shape, a plurality of holes arranged in a row, or a plurality of nozzles arranged in a row. Air blown out of the air blowing outlet 8 is drawn through the circulating air intake port 9 formed on the one surface 7 by the action of the air fan 10. The air blown out of this air blowing outlet 8 forms the upwardly directed air curtain 4 which in turn forms the space 5 defining the part of the room 2 together with the screen elements 3. Incidentally, although any fan 10 may be utilized as long as it can form an air curtain, a percolation type fan is the most appropriate to this embodiment. In a lower portion of the surface 7 of the screen element 3, there is formed the air intake port 12 through which air in the space 5 enters by the action of the air discharger 15. The air discharger 15 is separated by a separating plate 17 from the air blowing outlet 8. This air is cleaned by the air cleaner 14 and discharged outside the space 5 through the air discharging port 13 on the opposite surface 11. The amount of air discharged from the discharging port 13 is set to be larger than the amount of air involved by the air curtain 4 from the outside of the space 5 (hereinafter referred to as the externally involved air amount Q), thereby developing a negative pressure state in the space 5. In other words, the air discharging amount of the air discharger 15 is set to be larger than the externally involved airflow amount Q.

Generally, an air amount discharged from the air discharger 15 is calculated by the following equations:

$$Qt = 0.55(H/W_o)^{1/2} Q_0 \qquad (1)$$

$$Q > 1/2(Qt - Q_0) \qquad (2)$$

where

$Q =$ Externally involved airflow amount [$m^3$/min]

$Q_0 =$ Airflow amount of the air curtain [$m^3$/min]

$W_0 =$ Width of the blowing port of the air curtain [m]

$H =$ Distance from the top of the screen element to the ceiling [m]

$Qt =$ Airflow amount of the air curtain which reaches the ceiling [$m^3$/min]

Incidentally, the type of the air discharger 15 is not particularly limited. The air cleaner 14 is also not limited to any particular form and may for example, be a filter or an electric dust collector.

Next, description will be made to how to utilize the screen 1 having air cleaning function constructed as described above.

First, a screen element 3 having appropriate height and width is selected in conformity with the shape and size of a room 2, and a required number of the screens are prepared. In the example shown in Fig. 2, four screen elements 3 are installed. In this event, the screen elements 3 are installed to surround part of the room 2 in a manner that the circulating air intake ports 9 and the air intake ports 12 of the respective screen elements 3 are directed toward the space 5 in Fig. 2. Then, the fan 10 and the air discharger 15 are operated. When the fan 10 starts operating, air enters the circulating air intake port 9 and blows out from the air blowing port 8, thereby forming an air curtain 4. This air curtain 4 and the screen elements 3 surround the part of the room 2 to define the space 5 in which air is circulated. In this event, the air curtain 4 involves air outside the space 5 (the externally involved air amount Q).

Since the air discharger 15 is also operating, air within the space is sucked into the air intake port 12 and cleaned by a filter or the like which constitutes the air cleaner 14. The clean air thus produced is discharged from the air discharging port 13 formed in the opposite face 11 of the screen element to the outside of the space 5 by the air discharger 15. In this event, the airflow amount of the air discharger 15 is set to a value larger than the externally involved air amount Q, thereby developing a negative pressure within the space 5. Therefore, even if a person smokes a cigarette within the space 5 in the negative pressure state, the smoke will never leak from the space 5 to the outside but is sucked through the air intake port 12, cleaned by the air cleaner 14, and discharged to the outside.

In summary, the screen 1 having an air cleaning function according to this embodiment forms the space 5 maintained in a stable negative pressure state, wherein even if a person smokes inside the space 5, the smoke will never leak outside the space 5, thereby making it possible to keep the environment inside the room 2 satisfactory.

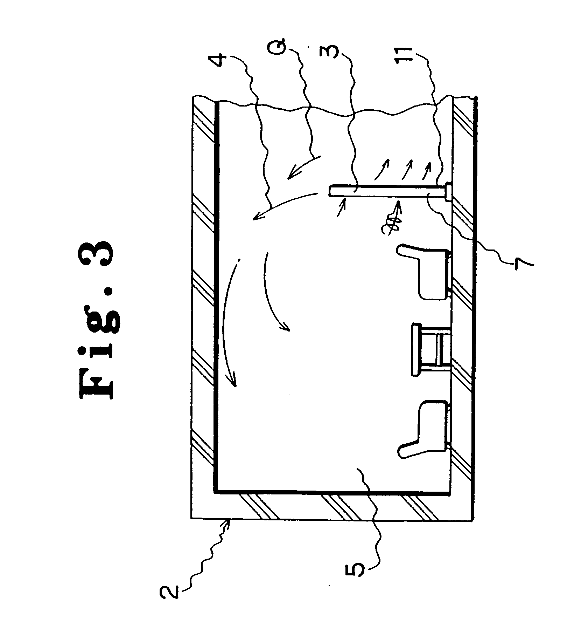

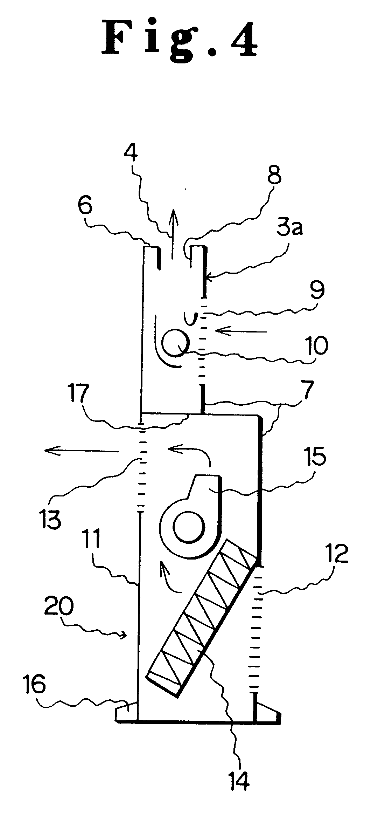

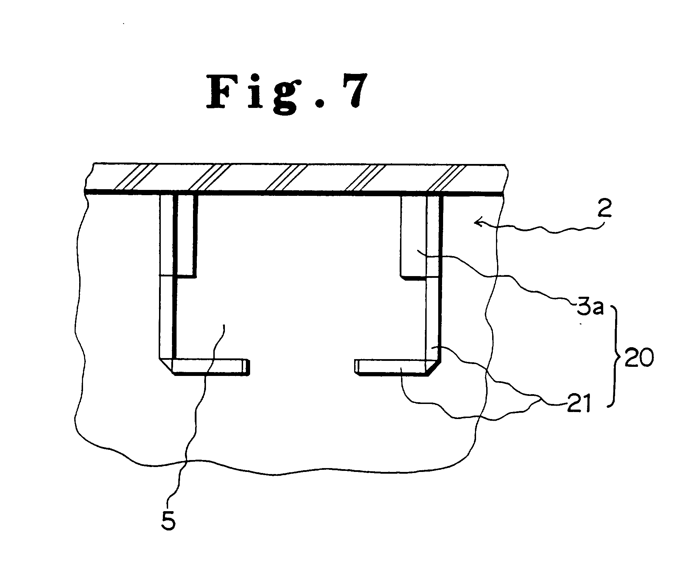

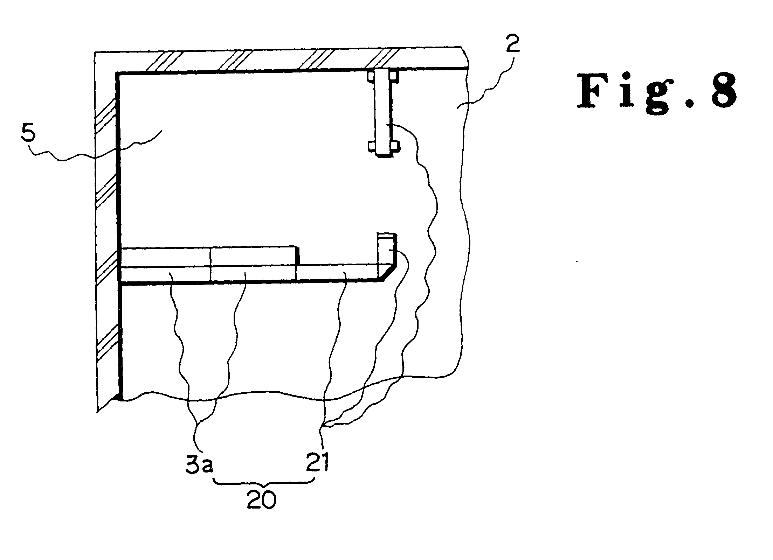

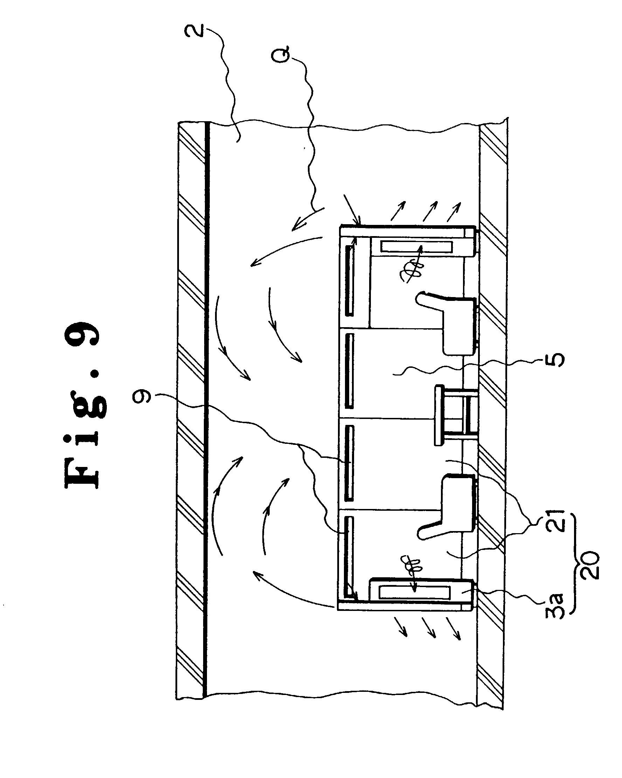

Figs. 4 - 9 illustrate another embodiment of the present invention. As seen in Fig. 4, a screen having an air cleaning function differs from the screen 1 shown in Figs. 1 - 3 in that the screen comprises a screen element 3a, similar to that of Figs. 1 to 3 but equipped with an air discharger 15 with a larger airflow amount and an air cleaner 14 also with a larger operating amount. The rest of the construction is similar to that of the embodiment shown in Figs. 1 - 3, so that the same reference numerals are given to the corresponding parts, and explanation thereof will be omitted.

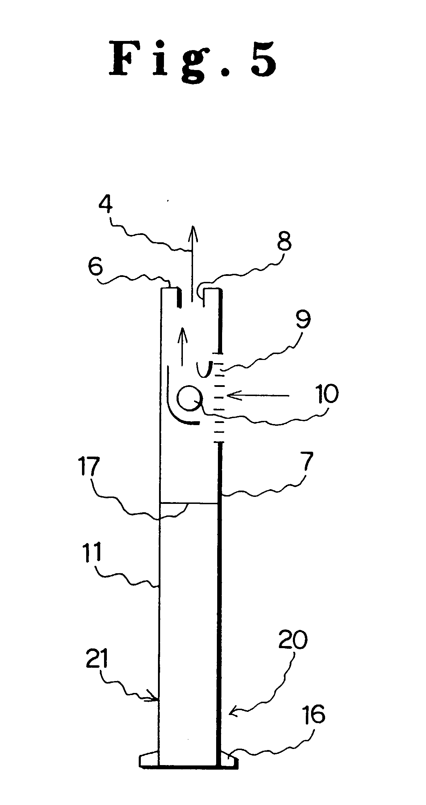

Fig. 5 shows a screen element 21 similar to that of Fig. 1 except that the lower half is not provided with an air filter and air discharger. Instead only the upper air circulating port 9, fan 10 and blowing outlet 8 in order to produce the air curtain are provided.

This screen element 21 does not, per se, fall within the scope of the invention but as will be understood from the following description, it may be combined with screen elements according to the invention to form screens.

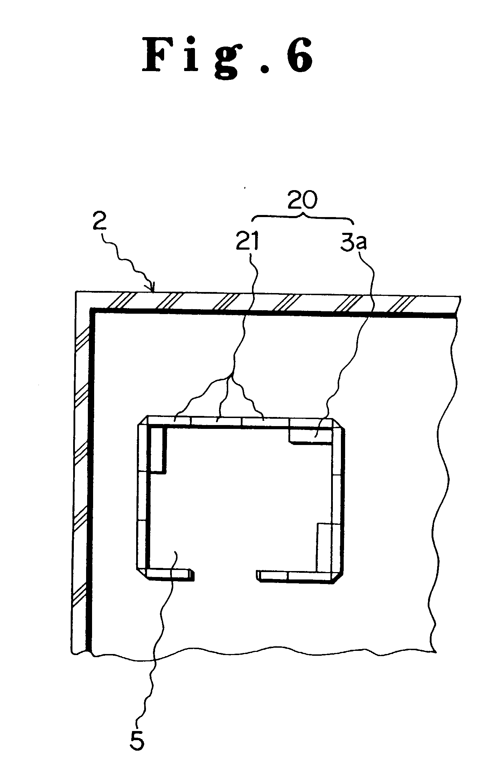

Figs. 6 - 8 show how the screen elements of Figs 4 and 5 may be combined to define a screen (20). Several sets of these selected screen elements are prepared of appropriate height and width and then combined to form an air curtain as shown in Figs. 6 - 8. In this event, the screen elements 3a (Fig. 4), and the screen elements 21 (Fig. 5) for air curtain are installed, similarly to the foregoing embodiment of Figs. 1 - 3, such that circulating air intake ports 9 and air intake ports 12 of the respective screen elements are located on the side of a space 5, while air discharging ports 13 are directed outside the space 5. Next, fans 10 and air dischargers 15 of the respective screen elements 3a, 21 are driven. When the respective fans 10 operate, air enters the circulating air intake ports 9 and exits from air blowing ports 8 to form an air curtain 4. This air curtain 4, and the screen elements surround part of a room 2 to define the space 5, in which air is circulated. In this event, the air curtain 4 involves air (externally involved air amount Q) from the outside of the space 5. Similarly to the foregoing embodiment shown in Figs. 1 - 3, air within the space 5 is cleaned by the air cleaners 14 with a larger power and discharged from the air discharging port 13 by the air dischargers 15 with a larger airflow amount to develop a negative pressure in the space 5. By the combination of the screen element 3a (Fig. 4) equipped with the air cleaner, and the separate screen element 21 for generating an air curtain alone according to this embodiment, the screen can be made compact as a whole, the number of the air cleaners 14 is reduced, and maintenance is correspondingly facilitated.

As described above in detail, the fans arranged in the screen elements are operated to extract air by means of the circulating air intake ports and blow the air from the air blowing ports to form an upwardly directed air curtain, whereby part of a room is surrounded by the air curtain and the screen elements. Then, the air dischargers are operated to extract air from within the space via the lower air intake ports to clean the extracted air by the air cleaners. Since the amount of clean air discharged from the air discharging port by the air dischargers is set to be larger than the amount involved from the outside of the space, a negative pressure is developed within the space, whereby contaminated air possibly generated within the space will never leak to the outside. It is not necessary to additionally provide separate extraction pipes and air dischargers on the ceiling or the like, so that the screens having an air cleaning function can be easily installed at any part of a room for preventing contaminated air such as cigarette smoke within the surrounded space from leaking to the outside, with the result that the contaminated air is cleaned inside the space before being discharged and the room will never be contaminated. In addition, since the fan for forming an air curtain and the air discharger for cleaning air and discharging the cleaned air to the outside of the space are separately provided, the air curtain can be stably formed without pressure drop, compared with a case where an air amount is adjusted by an airflow amount adjusting means such as a damper, thereby presenting a good operating efficiency as a whole.

Also, in the second embodiment, where the screen body equipped with an air cleaner and the screen element exclusively for generating an air curtain are separately formed, the whole size is made compact, which allows the user to easily lay out the screen in a room and particularly facilitates maintenance of the air cleaner.

**Claims**

1. A screen element (3) for an air cleaning screen (1) comprising:

   two spaced apart, opposed screen surfaces (7,11);
   an air blowing port (8) formed in an upper portion of the screen element;
   a circulating air intake port (9) formed in one surface (7,11) thereof;
   a fan (10) disposed between said air blowing port (8) and said circulating air intake port (9) for taking in air through said circulating air intake port (9) and blowing air out through said air blowing port (8) to form an upwardly directed air curtain and;
   a second air intake port (12) formed on the same surface (7,11) on which said circulating air intake port (9) is provided characterised in that
   an air discharge port (13) is formed on the surface (7,11) opposite to both the second air intake port and the circulating air intake port and in that;
air cleaning means (14) and air discharging means (15) are both disposed between said second air intake port (12) and said air discharging port (13).

2. A screen (1) with an air cleaning function comprising at least one first screen element (3) as claimed in claim 1.

3. A screen (1) as claimed in claim 2 further comprising at least one second screen element (21), said second screen element (21) comprising:

   two spaced apart, opposed screen surfaces (7,11);
   an air blowing port (8) formed in an upper portion of the screen element;
   a circulating air intake port (9) formed in one surface (7,11) thereof;
   a fan (10) disposed between said air blowing port (8) and said circulating air intake port (9) for taking in air through said circulating air intake port (9) and blowing air out through said air blowing port (8) to form an upwardly directed air curtain.

4. A screen installation comprising a screen (1) as claimed in claim 2 or 3, said screen (1) being installed in a room (2) so as to surround part (5) of said room (2), with said air intake ports (9,12) of said screen elements (3,20) being directed inwardly, wherein, in use, the air amount discharged by said air discharging means (15) provided in said one or more first screen elements (3) is set to be larger than the amount of air involved by said air curtain from the outside of said space.

**Patentansprüche**

1. Schirmelement (3) für einen Luftreinigungsschirm (1), umfassend:

   zwei mit Abstand angeordnete, entgegengesetzte Schirmoberflächen (7, 11);
   eine Luftblasöffnung (8), die in einem Oberteil des Schirmelements gebildet ist;
   eine Zirkulationsluft-Einlaßöffnung (9), die in einer Oberfläche (7, 11) von diesem gebildet ist;
   ein Gebläse (10), das zwischen der Luftblasöffnung (8) und der Zirkulationsluft-Einlaßöffnung (9) angeordnet ist, um Luft durch die Zirkulationsluft-Einlaßöffnung (9) aufzunehmen und Luft durch die Luftblasöffnung (8) zur Bildung eines nach oben gerichteten Luftvorhangs auszublasen; und

eine zweite Lufteinlaßöffnung (12), die an derselben Oberfläche (7, 11) gebildet ist, an der die Zirkulationsluft-Einlaßöffnung (9) vorgesehen ist, dadurch gekennzeichnet, daß eine Luftauslaßöffnung (13) an der sowohl der zweiten Lufteinlaßöffnung als auch der Zirkulationsluft-Einlaßöffnung entgegengesetzten Oberfläche (7, 11) gebildet ist und daß ein Luftfiltermittel (14) und ein Luftausgabemittel (15) beide zwischen der zweiten Lufteinlaßöffnung (12) und der Luftauslaßöffnung (13) angeordnet sind.

2. Schirm (1) mit Luftreinigungsfunktion, umfassend wenigstens ein erstes Schirmelement (3) nach Anspruch 1.

3. Schirm (1) nach Anspruch 2, der ferner wenigstens ein zweites Schirmelement (21) umfaßt, wobei das zweite Schirmelement (21) umfaßt:

zwei mit Abstand angeordnete entgegengesetzte Schirmoberflächen (7, 11);
eine Luftblasöffnung (8), die in einem oberen Teil des Schirmelements gebildet ist;
eine Zirkulationsluft-Einlaßöffnung (9), die in einer Oberfläche (7, 11) von diesem gebildet ist;
ein Gebläse (10), das zwischen der Luftblasöffnung (8) und der Zirkulationsluft-Einlaßöffnung (9) angeordnet ist, um Luft durch die Zirkulationsluft-Einlaßöffnung (9) aufzunehmen und Luft durch die Luftblasöffnung (8) zur Bildung eines nach oben gerichteten Luftvorhangs auszublasen.

4. Schirmanordnung mit einem Schirm (1) nach Anspruch 2 oder 3, wobei der Schirm (1) in einem Raum (2) so installiert ist, daß er einen Teil (5) des Raums (2) umgibt, wobei die Lufteinlaßöffnungen (9, 12) der Schirmelemente (3, 20) nach innen gerichtet sind, wobei bei Verwendung die Luftmenge, die von dem in dem einen oder in mehreren der ersten Schirmelemente (3) vorgesehenen Luftausgabemittel (15) ausgegeben wird, größer festgelegt ist als die Luftmenge, die durch den Luftvorhang von außerhalb des Bereichs einbezogen wird.

**Revendications**

1. Elément d'écran (3) pour un écran d'épuration d'air (1) comprenant :

deux surfaces d'écran espacées et opposées (7, 11) ;
un orifice de soufflage d'air (8) formé dans une partie supérieure de l'élément d'écran ;
un orifice de prise d'air de circulation (9) formé dans une de ses surfaces (7, 11) ;
un ventilateur (10) disposé entre ledit orifice de soufflage d'air (8) et ledit orifice de prise d'air de circulation (9) pour faire entrer de l'air à travers ledit orifice de circulation et souffler de l'air à l'extérieur à travers l'orifice de soufflage d'air (9) pour former un rideau d'air dirigé vers le haut et ;
un deuxième orifice de prise d'air (12) formé sur la même surface (7, 11) sur laquelle ledit orifice de prise d'air de circulation (9) est prévu, caractérisé
en ce qu'un orifice de rejet d'air (13) est formé sur la surface (7, 11) opposée à la fois au deuxième orifice de prise d'air et à l'orifice de prise d'air de circulation, et en ce que ;
des moyens d'épuration d'air (14) et des moyens de rejet d'air (15) sont tous deux disposés entre ledit deuxième orifice de prise d'air (12) et ledit orifice de rejet d'air (13).

2. Ecran (1) ayant une fonction d'épuration d'air comprenant au moins un premier élément d'écran (3) selon la revendication 1.

3. Ecran (1) selon la revendication 2 comprenant en outre au moins un deuxième élément d'écran (21), ledit deuxième élément d'écran (21) comprenant :

deux surfaces d'écran espacées et opposées (7, 11) ;
un orifice de soufflage d'air (8) formé dans une partie supérieure de l'élément d'écran ;
un orifice de prise d'air de circulation (9) formé dans une de ses surfaces (7, 11) ;
un ventilateur (10) disposé entre ledit orifice de soufflage d'air (8) et ledit orifice de prise d'air de circulation (9) pour faire entrer de l'air à travers ledit orifice de soufflage d'air (9) afin de former un rideau d'air dirigé vers le haut.

4. Installation d'écran comprenant un écran (1) selon la revendication 2 ou 3, ledit écran (1) étant monté dans un local (2) pour entourer une partie (5) dudit local (2), avec lesdits orifices (9, 12) de prise d'air desdits éléments d'écran (3, 20) dirigés vers l'intérieur, dans lequel, en utilisation, le débit d'air rejeté par lesdits moyens (15) de rejet d'air prévus dans un ou plusieurs desdits premiers éléments d'écran (3) est réglé pour être plus grand que le débit d'air entraîné par ledit rideau d'air et pris à l'extérieur dudit espace.

# Fig.1

# Fig.2

# Fig. 3

# Fig.4

# Fig. 5

# Fig.6

Fig.7

# Fig. 8

# Fig. 9

EP 0 582 010 B1